# EUROPÄISCHE PATENTSCHRIFT

(11) **EP 3 388 308 B1**
(45) Veröffentlichungstag und Bekanntmachung des Hinweises auf die Patenterteilung: **27.05.2020**
(21) Anmeldenummer: 18166102.6
(22) Anmeldetag: 06.04.2018
(51) Int. Cl.: B62B 3/06, B60C 3/06, B60C 7/00

(54) **FLURFÖRDERZEUG ZUR BE- UND ENTLADUNG VON MIT RILLEN VERSEHENEN LADEFLÄCHEN**
INDUSTRIAL TRUCK FOR LOADING AND UNLOADING OF LOADING AREAS WITH GROOVES
CHARIOT DE MANUTENTION DESTINÉ AU CHARGEMENT ET AU DÉCHARGEMENT DES SURFACES DE CHARGEMENT POURVUES DE RAINURES

(30) Priorität: 13.04.2017 DE 102017108089
(43) Veröffentlichungstag der Anmeldung: 17.10.2018
(73) Patentinhaber: Jungheinrich Aktiengesellschaft, 22047 Hamburg (DE); Blickle Räder + Rollen GmbH & Co.KG, 72348 Rosenfeld (DE)
(72) Erfinder: Trost, Marcus, 06792 Sandersdorf-Brehna (DE); Halfpap, Tobias, 06188 Landsberg (DE); Mittag, Stefan, 04178 Leipzig (DE); Hölle, Rolf, 72348 Rosenfeld (DE); Zimmer, Thomas, 78655 Dunningen (DE); Schwarz, Michael, 72348 Rosenfeld (DE)
(74) Vertreter: Hauck Patentanwaltspartnerschaft mbB

(56) Entgegenhaltungen:
- EP-A2- 0 979 742
- DE-A1-102010 028 059
- GB-A- 880 676

## Beschreibung

Die vorliegende Erfindung betrifft ein Flurförderzeug zur Be- und Entladung von mit Rillen versehenen Ladeflächen.

Mit Rillen versehene Ladeflächen treten in unterschiedlichen Lagerumgebungen auf. Beispielsweise können Kühlhaus-Anhänger mit Rillen versehene Ladeflächen besitzen, wobei die Rillen für einen Wasserablauf und/oder gegen eine flächige Eisbildung in dem Anhänger dienen. Die Rillen können dabei oft eine Breite von einigen Zentimetern besitzen, wodurch ein Rad eines Flurförderzeugs in eine Rille eintauchen kann und ein Manövrieren des Flurförderzeugs erschwert oder unmöglich gemacht wird. Insbesondere wenn ein gelenktes Rad in eine solche Rille eintaucht, ist seine Lenkung deutlich erschwert. Auch angetriebene Räder werden durch ihr Eintauchen in die Rille behindert und sind schlecht kontrollierbar.

Eine einfache und naheliegende Lösung für Flurförderzeuge, deren Einsatzgebiet auch mit Rillen versehene Ladeflächen umfasst, besteht darin, die Breite des Rades so groß zu wählen, dass ein Eintauchen in die Rillen nicht länger möglich ist. Bei dieser Vorgehensweise hat sich als Nachteil herausgestellt, dass ein breiteres Rad an dem Flurförderzeug oft konstruktiv gar nicht vorgesehen werden kann, da der Bauraum stark beschränkt ist. Hinzu kommt, dass durch eine Verbreiterung des Rades sich eine Dreh-Lenkachse des Flurförderzeugs nicht länger in einem optimalen Radaufstandspunkt befindet und so zusätzliche Momente bei der Lenkung des Rades auftreten.

Aus EP 0 979 742 A1 ist ein Luftreifen bekannt geworden, der eine unsymmetrische Ausbildung mit einer konvexgewölbten, radial nach innen gekrümmten gegen eine Reifenseitenwand verlaufenden Auflaufflächenteil besitzt. Diese Verrundung des Reifens ist besonders von Vorteil für Kraftfahrzeuge, bei denen der Reifen im Wesentlichen sturzkonstant geführt wird.

Aus GB 880,676 ist eine Rolle am freien Ende eines Lastarms bekannt geworden, deren Bandage eine Anfasung besitzt.

Aus DE 20 10 028 059 A1 ist ein Antriebsrad für ein Flurförderzeug bekannt geworden, das eine Bandage mit einer seitlich vorgesehenen Anfasung besitzt.

Vor diesem Hintergrund liegt der Erfindung die Aufgabe zugrunde, ein Flurförderzeug bereitzustellen, das im besonderen Maße an einen möglichen Einsatz zur Be- und Entladung von mit Rillen versehenen Ladeflächen ausgestaltet ist, ohne Abstriche bei dem sonstigen Fahr- oder Lenkverhalten in Kauf zu nehmen.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist vorgesehen und bestimmt zur Be- und Entladung von mit Rillen versehenen Ladeflächen. Solche Ladeflächen treten beispielsweise bei Lastkraftwagen mit Kühleinrichtungen auf, um stehendes Wasser oder eine geschlossene Eisdecke auf der Ladefläche zu vermeiden. Das Flurförderzeug besitzt mindestens ein lenkbares Rad, das eine Felge und einen auf dieser sitzenden Reifen aus Kunststoffmaterial besitzt. Erfindungsgemäß weist der Reifen einen zylindrischen Hauptabschnitt und einen seitlich von diesem abstehenden Stützabschnitt auf. Der Reifen ist bevorzugt eine Bandage aus einem Vollmaterial mit elastischen Eigenschaften. Der Hauptabschnitt bildet eine Aufstandsfläche für das Rad, über die das Eigengewicht und eine eventuell aufgenommene Last des Flurförderzeugs auf den Untergrund abgeleitet werden. Darüber hinaus besitzt der Reifen einen Stützabschnitt, der seitlich von dem zylindrischen Hauptabschnitt absteht. Der Stützabschnitt bildet eine Stützfläche, die auf einem ebenen Untergrund nicht in Bodenkontakt gelangt. Lediglich wenn die Aufstandsfläche ihren Bodenkontakt verliert, also frei läuft, kann das Flurförderzeug über die Stützfläche abgestützt werden. Die Stützfläche läuft bei aufstehender Aufstandsfläche frei, also ohne Bodenkontakt. Bei der erfindungsgemäßen Lösung wird einerseits ein verbreitertes Rad zur Verfügung gestellt, das in eine Rille oder eine andere Ausnehmung nur dann eintauchen kann, wenn der Stützabschnitt keinen Halt findet. Damit ist das Rad gleichwirkend zu einem verbreiterten Rad. Im Hinblick auf sein Fahrverhalten und seine Geometrie der Aufstandsfläche ist das Rad mit seinem Hauptabschnitt gegenüber einem herkömmlichen Rad, für das das Flurförderzeug konzipiert ist, unverändert. Das für die angreifenden Lenkmomente besonders wichtige Verhältnis von Dreh-Lenkachse und Aufstandsfläche kann bei dem Fahrzeug unverändert bleiben. Grundsätzlich kann bei dem erfindungsgemäßen Flurförderzeug das Rad auch zwei Abstützflächen besitzen, die sich seitlich von dem Hauptabschnitt erstrecken, jedoch kann die gewünschte Verbreiterung auch durch eine einseitige Stützfläche erzielt werden. Erfindungsgemäß besitzt die Stützfläche einen sich von dem Hauptabschnitt fort verjüngenden Durchmesser. Die Stützfläche ist somit als eine Fase ausgebildet und geht in die Aufstandsfläche ohne einen Absatz oder eine Kante über. Erfindungsgemäß verjüngt die Stützfläche sich konisch unter einem vorbestimmten Neigungswinkel. Bei der erfindungsgemäßen Ausgestaltung des Rades sind der Stützabschnitt und seine Stützfläche dazu ausgebildet, das Flurförderzeug zu halten und das Rad nicht in eine Rille oder eine andersartige Vertiefung eintauchen zu lassen.

Die Stützfläche kann als konische Stützfläche eine ebene Stützfläche oder eine gewölbte Stützfläche besitzen. Auch ist es möglich, dass die Stützfläche nur bereichsweise konisch mit einem vorbestimmten Neigungswinkel ausgebildet ist und an ihrem vom Hauptabschnitt fortweisenden Ende eine gewölbte Stützfläche besitzt.

Der Neigungswinkel, der sich als besonders günstig herausgestellt hat, liegt zwischen 6° und 26°. Bevorzugt kann der Winkel auch zwischen 11° und 21°, besonders bevorzugt zwischen 13° und 19°; insbesondere bei 16° liegen. Ein solcher Öffnungswinkel bietet den Vorteil, dass die Stützfläche nicht zu stark gegenüber der Aufstandsfläche geneigt ist.

In einer bevorzugten Ausgestaltung besitzt die Felge einen umlaufenden Felgenmantel, der in einen den Hauptabschnitt tragenden ersten Felgenmantelabschnitt einen Bereich mit konstantem Durchmesser und in einem den Stützabschnitt tragenden zweiten Felgenmantelabschnitt einen sich verjüngenden Durchmesser aufweist. In dieser Ausgestaltung folgt die Felge mit ihrem Felgenmantel und seinen beiden Felgenmantelabschnitten im Wesentlichen der Geometrie des Reifens mit seinem Haupt- und seinem Stützabschnitt.

Um die Gewichtskraft des Flurförderzeugs und gegebenenfalls seiner Last aufnehmen zu können, weist der zweite Felgenmantelabschnitt in radialer Richtung eine größere Wandstärke als der erste Felgenmantelabschnitt auf. Durch die dickere Ausbildung des zweiten Felgenmantelabschnitts kann auch bei einem Aufstehen nur auf einer Kante das Flurförderzeug ohne eine Beschädigung des Rades abgestützt werden.

In einer bevorzugten Ausgestaltung besitzt die Felge eine den Felgenmantel tragende Felgenwand, wobei erster und zweiter Felgenmantelabschnitt in unterschiedlicher Richtung von der Felgenwand abstehen. Über die Felgenwand und ihren Bohrungen ist das Rad beispielsweise mit einer Antriebswelle verbunden. In diesem Fall erstreckt sich bevorzugt der erste Felgenmantelabschnitt mit der Aufstandsfläche hin zu der Antriebswelle, während der zweite Felgenmantelabschnitt mit seiner Stützfläche von der Antriebswelle fortweist.

Die Breite der Aufstandsfläche in axialer Richtung beträgt bevorzugt 50 mm bis 150 mm, wobei Werte von 60 mm bis 80 mm und 65 mm bis 75 mm bevorzugt werden. Auch Werte im Bereich von 50 mm bis 55 mm sind möglich.

In einer ebenfalls bevorzugten Ausgestaltung besitzt die Abstützfläche in axialer Richtung eine Breite von 30 mm bis 50 mm, bevorzugt von 35 mm bis 45 mm. Untersuchungen haben ergeben, dass diese Breite bereits ausreicht, um ein Flurförderzeug zuverlässig abzustützen. In einer bevorzugten Ausgestaltung hat sich für die Breiten von Aufstandsfläche zur Abstützfläche ein Verhältnis von 2,6 bis 1,2, bevorzugt ein Verhältnis von 7 : 4 als vorteilhaft herausgestellt. Die Breite der Abstützfläche muss groß genug sein, um das Flurförderzeug sicher vor einem Eintauchen zu bewahren. Andererseits darf sie nicht größer als notwendig sein, um den knappen Bauraum an dem Flurförderzeug richtig auszunutzen.

Die vorliegende Erfindung wird nachfolgend an einem Ausführungsbeispiel näher erläutert. Es zeigen:
- Fig. 1: ein Niederhubflurförderzeug in einer schematischen Ansicht von der Seite,
- Fig. 2: einen Schnitt durch das lenkbare Antriebsrad,
- Fig. 3: Reifen mit Felge in einer perspektivischen Ansicht und
- Fig. 4: den Reifen in einer Ansicht von der Seite.

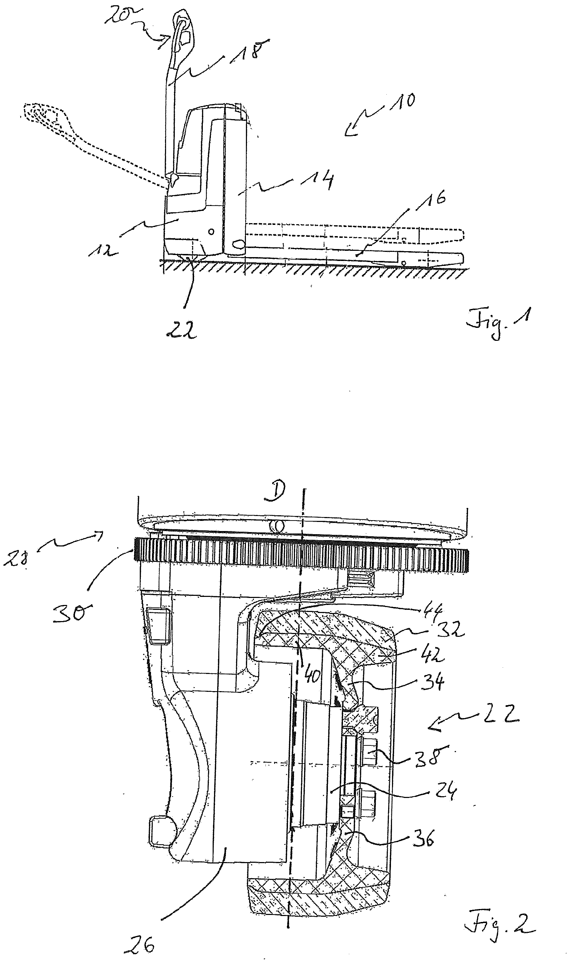

Fig. 1 zeigt ein Niederhubfahrzeug 10 mit einem Antriebsteil 12 und einem anhebbaren Lastteil 14, das über Lastrollen gestützte (nicht dargestellt) Gabelarme 16 besitzt. Das Antriebsteil 12 wird über eine Deichsel 18 mit Bedienelementen 20 gesteuert. Ein gelenktes und angetriebenes Rad 22 ist mittig, bezogen auf die Querachse, an dem Antriebsteil 12.

Fig. 2 zeigt das Rad 22 in einem Querschnitt mit seiner Radaufhängung. Das Rad 22 sitzt auf einer Ausgangswelle 24 des Getriebes 26. Das Getriebe 26 ist über eine drehbare Anordnung 28 an dem Antriebsteil 12 des Flurförderzeugs gelagert. Die Antriebsanordnung 28 besitzt ein Zahnrad 30, über das die Ausrichtung des gelenkten Rades in Bezug auf eine Dreh-Lenkachse D erfolgt.

Das im Querschnitt dargestellte Rad 22 besitzt einen Reifen 32 und eine Felge 34. Die Felge 34 besitzt eine Felgenwand 36, die sich im Wesentlichen in radialer Richtung des Rades 22 erstreckt und über Bolzen 38 mit der Antriebswelle 24 verbunden ist. Die Felgenwand 36 mündet in einen ersten Felgenmantelabschnitt 40 und in einen zweiten Felgenmantelabschnitt 42. Der ersten Felgenmantelabschnitt 40 steht auf der zum Getriebe 26 weisenden Seite von der Felgenwand 36 ab. Der erste Felgenmantelabschnitt 40 besitzt über seinen überwiegenden Bereich einen konstanten Durchmesser. Lediglich an seinem freien Ende ist der erste Felgenmantelabschnitt 40 mit einer Anschrägung 44 versehen, die eine Montage des Reifens 32 vereinfacht. Der zweite Felgenmantelabschnitt 42 erstreckt sich von der Felgenwand 36 in axialer Richtung von dem Getriebe 26 fort. In Fig. 2 ist zu erkennen, dass der zweite Felgenwandabschnitt 42 eine größere Dicke als der erste Felgenwandabschnitt 40 besitzt. Die größere Dicke ist dem Umstand geschuldet, dass die Fläche des zweiten Felgenwandabschnitts kleiner ist und somit mehr Kraft pro Fläche aufgenommen werden muss. Der zweite Felgenmantelabschnitt 42 ist gegenüber dem ersten Felgenwandabschnitt 40 konisch verjüngt.

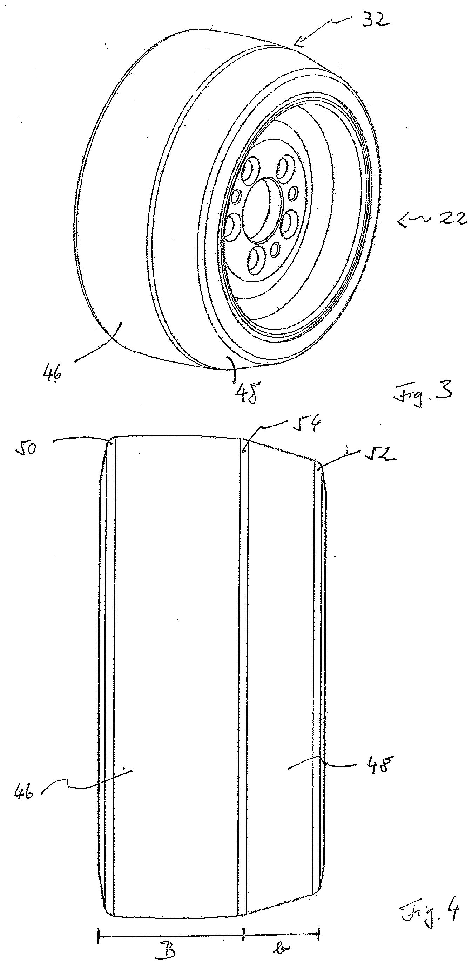

Fig. 3 zeigt das Antriebsrad 22 in seinem nicht montierten Zustand in einer perspektivischen Ansicht von der Seite. Der Reifen 32 des Rades besitzt eine zylindrische Aufstandsfläche 46, die in eine konisch sich verjüngende Stützfläche 48 übergeht. In den Fign. 3 und 4 ist ebenfalls zu erkennen, dass Aufstandsfläche 46 und Stützfläche 48 eine unterschiedliche Breite B, b in axialer Richtung des Rades besitzen. Aus Fig. 4 ist zu erkennen, dass die Breite B an der Aufstandsfläche 46 sich ungefähr wie 7 : 4 zu der Breite b der Stützfläche 48 verhält. Ebenfalls zu erkennen ist, dass an dem erfindungsgemäßen Rad 22 die Außenkanten 50, 52 der Reifen abgerundet sind, um Beschädigungen an dem Reifen durch den Untergrund zu vermeiden.

Neben dem dargestellten Ausführungsbeispiel mit einer zylindrisch verlaufenden Stützfläche 48 ist auch denkbar, eine gekrümmte Stützfläche vorzusehen. Auch ist es nicht notwendig, dass die Stützfläche 48 ohne Absatz in die Aufstandsfläche 46 übergeht. Ein gewisser Absatz im Bereich 54, der sicherstellt, dass bei der regulären Fahrt die Stützfläche 48 frei läuft, also ohne Bodenberührung, ist ebenfalls möglich.

### Bezugszeichenliste

- 10: Niederhubfahrzeug
- 12: Antrieb steil
- 14: Lastteil
- 16: Gabelarme
- 18: Deichsel
- 20: Bedienelement
- 22: Rad
- 24: Ausgangswelle
- 26: Getriebe
- 28: Antriebsanordnung
- 30: Zahnrad
- 32: Reifen
- 34: Felge
- 36: Felgenwand
- 38: Bolzen
- 40: erster Felgenmantelabschnitt
- 42: zweiter Felgenmantelabschnitt
- 44: Anschrägung
- 46: Aufstandsfläche
- 48: Stützfläche
- 50: Außenkante
- 52: Außenkante

## Patentansprüche

1. Flurförderzeug (10) zur Be- und Entladung von mit Rillen versehenen Ladeflächen mit mindestens einem lenkbaren Rad (22), das eine Felge (34) und einen auf dieser sitzenden Reifen (32) aus Kunststoffmaterial besitzt,
**dadurch gekennzeichnet, dass**
der Reifen (32) eine Bandage aus einem elastischen Vollmaterial mit einem zylindrischen Hauptabschnitt und einem seitlich abstehenden Stützabschnitt aufweist, wobei der Hauptabschnitt eine Aufstandsfläche (46) für das Rad und der Stützabschnitt eine Stützfläche (48) bildet, die einen sich von dem Hauptabschnitt fort verjüngenden Durchmesser aufweist und sich konisch unter einem vorbestimmten Neigungswinkel verjüngt, wobei die Stützfläche bei aufstehender Aufstandsfläche (46) frei läuft und bei frei laufender Aufstandsfläche (46) das Flurförderzeug abstützen kann und der vorbestimmte Neigungswinkel zwischen 6° und 26° liegt.

2. Flurförderzeug (10) nach Anspruch 1, **dadurch gekennzeichnet, dass** der Neigungswinkel zwischen 11° und 21° und bevorzugt zwischen 13° bis 19° liegt.

3. Flurförderzeug (10) nach Anspruch 1 oder 2, **dadurch gekennzeichnet, dass** der Reifen (32) im Hauptabschnitt und im Stützabschnitt eine gleiche Dicke in radialer Richtung besitzt.

4. Flurförderzeug (10) nach einem der Ansprüche 1 bis 3, **dadurch gekennzeichnet, dass** die Felge (34) einen umlaufenden Felgenmantel aufweist, der in einem den Hauptabschnitt tragenden ersten Felgenmantelabschnitt (40) einen Bereich mit konstantem Durchmesser und in einem den Stützabschnitt tragenden zweiten Felgenmantelabschnitt (42) einen sich verjüngenden Durchmesser aufweist.

5. Flurförderzeug (10) nach Anspruch 4, **dadurch gekennzeichnet, dass** der zweite Felgenmantelabschnitt (42) in radialer Richtung eine größere Wandstärke als der erste Felgenmantelabschnitt (40) aufweist.

6. Flurförderzeug (10) nach Anspruch 4 oder 5, **dadurch gekennzeichnet, dass** die Felge (34) eine den Felgenmantel tragende Felgenwand (36) aufweist, wobei erster und zweiter Felgenmantelabschnitt (40, 42) in unterschiedlicher Richtung von der Felgenwand (36) abstehen.

7. Flurförderzeug (10) nach einem der Ansprüche 1 bis 6, **dadurch gekennzeichnet, dass** die Breite der Aufstandsfläche (46) in axialer Richtung 50 mm bis 150 mm, bevorzugt 60 mm bis 80 mm und besonders bevorzugt 65 mm bis 75 mm entspricht.

8. Flurförderzeug (10) nach einem der Ansprüche 1 bis 7, **dadurch gekennzeichnet, dass** die Breite der Stützfläche (48) in axialer Richtung 30 mm bis 50 mm, bevorzugt von 33 mm bis 37 mm entspricht.

9. Flurförderzeug (10) nach einem der Ansprüche 1 bis 8, **dadurch gekennzeichnet, dass** die Breiten von Aufstandsfläche (46) zu Stützfläche (48) in einem Verhältnis von 2,6 bis 1,2, bevorzugt in einem Verhältnis von 7:4 zueinander stehen.

## Claims

1. Industrial truck (10) for loading and unloading grooved loading surfaces, having at least one steerable wheel (22), which has a rim (34) and a tyre (32) of plastic material sitting on the latter,
**characterised in that**
the tyre (32) comprises a bandage of a elastic solid material having a cylindrical main portion and a laterally projecting support portion, the main portion forming a contact surface (46) for the wheel and the support portion forming a support surface (48), which has a diameter tapering away from the main portion and which tapers conically at a predetermined angle of inclination, wherein the support surface runs freely when the contact surface (46) is standing up and can support the industrial truck when the contact surface (46) is running freely and the predetermined angle of inclination is between 6° and 26°.

2. Industrial truck (10) according to claim 1, **characterized in that** the angle of inclination is between 11° and 21° and preferably between 13° and 19°.

3. Industrial truck (10) according to claim 1 or 2, **characterized in that** the tyre (32) in the main portion and in the support portion has an equal thickness in the radial direction.

4. Industrial truck (10) according to one of the claims 1 to 3, **characterized in that** the rim (34) has a circumferential rim casing which has a region of constant diameter in a first rim casing section (40) carrying the main portion and a tapering diameter in a second rim casing section (42) carrying the support portion.

5. Industrial truck (10) according to claim 4, **characterized in that** the second rim casing section (42) has a greater wall thickness in the radial direction than the first rim casing section (40).

6. Industrial truck (10) according to claim 4 or 5, **characterized in that** the rim (34) has a rim wall (36) supporting the rim casing, wherein first and second rim casing sections (40, 42) project in different directions from the rim wall (36).

7. Industrial truck (10) according to one of the claims 1 to 6, **characterized in that** the width of the contact surface (46) in the axial direction corresponds to 50 mm to 150 mm, preferably 60 mm to 80 mm and particularly preferably 65 mm to 75 mm.

8. Industrial truck (10) according to one of claims 1 to 7, **characterized in that** the width of the support surface (48) in the axial direction corresponds to 30 mm to 50 mm, preferably from 33 mm to 37 mm.

9. Industrial truck (10) according to one of claims 1 to 8, **characterized in that** the widths of the contact surface (46) to the supporting surface (48) are in a ratio of 2.6 to 1.2, preferably in a ratio of 7:4 to one another.

## Revendications

1. Chariot de manutention (10) destiné au chargement et au déchargement de surfaces de chargement pourvues de rainures avec au moins une roue directrice (22), qui possède une jante (34) et un pneu (32) en matière plastique posé sur celle-ci,
**caractérisé en ce que**
le pneu (32) présente un bandage à base d'un matériau plein élastique avec une partie principale cylindrique et une partie de support dépassant latéralement, dans lequel la partie principale forme une surface de portée (46) de la roue et la partie de support une surface de support (48), qui présente un diamètre se réduisant à partir de la partie principale et se rétrécit coniquement sous un certain angle d'inclinaison prédéfini, dans lequel la surface de support est en roue libre lorsque la surface de portée (46) est en contact avec le sol et peut supporter le chariot de manutention lorsque la surface de portée (46) est en roue libre et l'angle d'inclinaison prédéfini se situe entre 6° et 26°.

2. Chariot de manutention (10) selon la revendication 1, **caractérisé en ce que** l'angle d'inclinaison se situe entre 11° et 21°, de préférence entre 13° et 19°.

3. Chariot de manutention (10) selon la revendication 1 ou 2, **caractérisé en ce que** le pneu (32) possède une même épaisseur dans la partie principale et dans la partie de support en direction radiale.

4. Chariot de manutention (10) selon l'une des revendications 1 à 3, **caractérisé en ce que** la jante (34) présente une garniture de jante périphérique, qui comporte une zone de diamètre constant dans une première partie de garniture de jante (40) portant la partie principale et un diamètre se rétrécissant dans une seconde partie de garniture de jante (42) portant la partie de support.

5. Chariot de manutention (10) selon la revendication 4, **caractérisé en ce que** la seconde partie de garniture de jante (42) présente une épaisseur de paroi supérieure à celle de la première partie de garniture de jante (40) dans la direction radiale.

6. Chariot de manutention (10) selon la revendication 4 ou 5, **caractérisé en ce que** la jante (34) présente une paroi de jante (36) portant la garniture de jante, dans lequel les première et seconde parties de garniture de jante (40) dépassent de la paroi de jante (36) dans différentes directions.

7. Chariot de manutention (10) selon l'une des revendications 1 à 6, **caractérisé en ce que** la largeur de la surface de portée (46) dans la direction axiale équivaut à 50 mm jusqu'à 150 mm, de préférence 60 mm jusqu'à 80 mm, mieux encore 65 mm jusqu'à 75 mm.

8. Chariot de manutention (10) selon l'une des revendications 1 à 7, **caractérisé en ce que** la largeur de la surface de support (48) dans la direction axiale équivaut à 30 mm jusqu'à 50 mm, de préférence 33 mm jusqu'à 37 mm.

9. Chariot de manutention (10) selon l'une des revendications 1 à 8, **caractérisé en ce que** les largeurs de la surface de portée (46) et de la surface de support (48) se situent dans un rapport de 2,6 à 1,2, de préférence dans un rapport de 7:4 l'une à l'autre.
